# EUROPÄISCHE PATENTSCHRIFT

(11) **EP 3 597 463 B1**
(45) Veröffentlichungstag und Bekanntmachung des Hinweises auf die Patenterteilung: **16.03.2022**
(21) Anmeldenummer: 19187194.6
(22) Anmeldetag: 19.07.2019
(51) Int. Cl.: B60K 1/00, B60K 7/00, B60T 1/00, B60K 11/02

(54) **E-ACHSEN-MODUL**
E-AXLE MODULE
MODULE D'ESSIEU ÉLECTRIQUES

(30) Priorität: 20.07.2018 DE 102018212120
(43) Veröffentlichungstag der Anmeldung: 22.01.2020
(73) Patentinhaber: Robert Bosch GmbH, 70442 Stuttgart (DE)
(72) Erfinder: Mueller, Norbert, 71642 Ludwigsburg (DE); Fassnacht, Jochen, 75365 Calw (DE); Trautmann, Simon, 70599 Stuttgart (DE); Schaumann, Arno, 71638 Ludwigsburg (DE); Verhagen, Armin, 71701 Schwieberdingen (DE); Boros, Laszlo, 71636 Ludwigsburg (DE); Beulich, Klaus, 71263 Weil Der Stadt (DE)

(56) Entgegenhaltungen:
- EP-A1- 2 942 218
- DE-A1-102010 035 643
- DE-A1-102011 000 547
- DE-A1-102012 112 377
- US-A1- 2005 006 164

## Beschreibung

Die vorliegende Erfindung bezieht sich auf ein E-Achsen-Modul mit mindestens einer in dieses integrierten E-Maschine, die eines oder beide am E-Achsen-Modul aufgenommenen Räder antreibt, wobei das E-Achsen-Modul darüber hinaus ein Getriebe umfasst.

### Stand der Technik

Bei heutigen zum Teil elektrifizierte Antriebsstränge aufweisenden Fahrzeugen beinhalten elektrische Achsen, einen Motor, Getriebe, Ansteuerelektronik in einem Gesamtkonzept. Damit werden nicht nur die Antriebsfunktionen abgedeckt, sondern auch zum Teil die Bremsfunktion. Beispielsweise ist zu nennen, dass "one pedal drive", wonach beim Loslassen des Fahrpedales das Fahrzeug von der E-Maschine bis in den Stillstand abgebremst wird und sogar auf leichten Steigungen bzw. Gefällen festgehalten wird, ohne dass es zu einer Betätigung des Bremspedals des Fahrzeugs kommt. Obwohl ein Teil der Bremsfunktionen mit dem elektrischen Antrieb abgedeckt wird, gibt es zwei getrennte Systeme sowohl für den Antrieb als auch für die Bremse. Diese umfassen jeweils eigene elektrische Steuergeräte und sowie eigene Konzepte für das ""Packaging, das Thermomanagement, Service, Diagnose, Safety und Rückfallebenen, Stromversorgung sowie die Sensorik". Sogar für den Fall, dass diese beiden Systeme von einem und demselben Lieferanten stammen, werden diese getrennt in Zusammenarbeit mit dem Original Equipment Manufacturer (OEM) in ein Fahrzeug-Gesamtkonzept integriert. Die eingesetzten Entwicklungsumgebungen sind dabei jedoch höchst unterschiedlich. Eine abgesicherte Kommunikation zwischen Systemen und Steuergeräten ist zwingend notwendig. Dabei können höhere Signallaufzeiten negative Auswirkungen auf verteilte Funktionen haben, so zum Beispiel eine Stabilisierung durch Motor- und Bremseingriffe oder eine Bilanzierung zwischen Rekuperation und Reibbremse.

Bei heutigen Fahrzeugen umfassen die Bremssysteme offene luftgekühlte Reibelement, die meistens direkt an der Felge eines Rades des Fahrzeugs aufgenommen sind. Damit einhergeht beispielsweise Nachteil aufgrund des Umwelteinflusses, insbesondere Korrosion, gerade wenn es wegen Rekuperation kaum verwendet wird, so dass eine verminderte Bremswirkung gerade im Notfall auftritt bzw. ein vorzeitiger Servicetausch erforderlich ist, sowie eine optische Auffälligkeit besteht. Es kommt bei offenen luftgekühlten Reibelementen zu einer hohen Wasserfilmbildung bei Regen, so dass eine verminderte Bremswirkung auftritt. Ferner steht eine Feinstaubemission aufgrund der Bremsauslegung durch deren offene Bauart aufgrund der direkten Luftkühlung. Inwieweit diese Feinstaubemission zusätzlich in Gesetzeslagen, die in der Zukunft liegen, Rechnung trägt, muss zunächst dahinstehen.

Des Weiteren ist darauf hinzuweisen, dass das Thermomanagement derartiger offener luftgekühlter Reibelemente dadurch charakterisiert ist, dass Reibwärme stets verloren geht, auch wenn für eine Batterieheizung oder eine Klimaanlage, beispielsweise zur Innenraumbeheizung des Fahrzeugs wertvoll wäre. Es besteht kaum eine Möglichkeit, diese Wärme in ein gemeinsames Thermomanagement einzubinden. Aufgrund der offenen Bauweise derartiger Bremssysteme kann eine Wärmekapazität benachbarter Bauteile nicht oder nur unzureichend ausgenutzt werden. Eine kurze scharfe Notbremsung würde beispielsweise alleine von der Bremsscheibe aufgenommen, so dass entstehende Abwärme über Luftkonvektion bzw. Strahlung innerhalb Sekunden vernachlässigbar wäre.

Des Weiteren ist bei so offenen luftgekühlten Reibelementen eine Elementierung durch eine zusätzliche Parkbremse mit einer eigenen Aktuierung notwendig, da die Betriebsbremse im abgestellten Fahrzeug keine Zuverlässigkeit hat und/oder ihre Zuverlässigkeit alleine nicht ausreicht.

In Bezug auf die bestehenden offenbauenden luftgekühlten Bremssysteme an Fahrzeugen ist des Weiteren darauf hinzuweisen, dass die Masse der Reibbremse auch durch ihre Mindest-Wärmekapazität vorgegeben ist. Der Raumbedarf sowie der Durchmesser einer Reibbremse ist relativ hoch, weil das Bremsmoment direkt am abzubremsenden Rad ohne eine Übersetzung erzeugt wird.

Die Druckschrift EP 2942218 A1 beschreibt eine Antriebseinheit für ein Elektrofahrzeug zum Antrieb von zwei Rädern an einer gemeinsamen Achse.

Die Druckschrift DE 10 2012 112 377 A1 beschreibt eine Antriebsachse für eine mobile Arbeit zu Maschine mit einer Flüssigkeitskühlung für den Fahrermotor, die Leistungselektronik und das Getriebe.

### Darstellung der Erfindung

Die vorliegende Erfindung schafft ein E-Achsen-Modul mit den Merkmalen des unabhängigen Patentanspruchs 1. Weitere vorteilhafte Ausführungsformen sind Gegenstand der abhängigen Patentansprüche.

Es wird ein E-Achsen-Modul vorgeschlagen, welches mindestens eine in dieses integrierte E-Maschine umfasst, wobei dieses eines oder beide am E-Achsen-Modul aufgenommene Räder antreibt und mindestens ein Getriebe umfasst. Das E-Achsen-Modul weist mindestens eine in dieses integrierte Bremse auf, die entweder strukturell in die mindestens eine E-Maschine oder strukturell in das Getriebe integriert ist.

Durch die vorgeschlagene Lösung kann in vorteilhafter Weise erreicht werden, dass die in das E-Achsen-Modul integrierte Bremse gekapselt und nicht mehr Umgebungseinflüssen ausgesetzt wird. Dadurch werden Probleme wie Korrosion, Feinstaubemission, die Wasserfilmproblematik vermieden. Anstelle der Luftkühlung wird die in das E-Achsen-Modul integrierte, gekühlte Bremse der erfindungsgemäß vorgeschlagenen Lösung folgend nunmehr durch eine Kühlfluidkühlung gleichzeitig mit E-Maschine und Getriebe gekühlt.

In Weiterführung des vorgeschlagenen Gedankens ist das E-Achsen-Modul so beschaffen, dass dieses beispielsweise eine E-Maschine als Einzelantrieb aufweisen kann, wobei ein Differential oder ein Torsendifferential vorgesehen ist, an dem ausgangsseitig Bremsen integriert sind. Auch bei dieser Ausführungsvariante mit einem Differential oder einem Torsendifferential eines E-Achsen-Moduls, sind die integrierten, gekühlten Bremsen gekapselt und von Umwelteinflüssen abgekoppelt.

Alternativ zum Vorsehen lediglich einer E-Maschine als Einzelantrieb in einem E-Achsen-Modul kann in einer Ausführungsvariante des E-Achsen-Moduls dieses eine radindividuelle erste E-Maschine und eine weitere radindividuelle zweite E-Maschine aufweisen, die jeweils ein Getriebe antreiben, wobei das E-Achsen-Modul den E-Maschinen jeweils zugeordnete integrierte Bremsen aufweist. Auch bei dieser Ausführungsvariante ergibt sich ein kompaktbauendes E-Achsen-Modul, was insbesondere frei von einem Differentialgetriebe ist.

Die in das E-Achsen-Modul integrierten, gekühlten Bremsen können in einer ersten Bremsenposition jeweils zwischen der ersten E-Maschine und dem Getriebe und zwischen der zweiten E-Maschine und dem dieser zugeordneten Getriebe angeordnet

werden. Daneben besteht die Möglichkeit, die integrierten, gekühlten Bremsen beim erfindungsgemäß vorgeschlagenen E-Achsen-Modul in einer zweiten Bremsposition am jeweils am Getriebeabtrieb, der durch die erste und die zweite E-Maschine angetriebene Getriebe, anzuordnen.

Das E-Achsen-Modul, sei es mit einer E-Maschine als Einzelantrieb, sei es in der Ausführungsvariante mit zwei E-Maschinen für radindividuelle Antriebe, kann insgesamt eine Hinterachse eines Fahrzeugs bilden. Es besteht auch die Möglichkeit, das E-Achsen-modul so zu konfigurieren, dass das E-Achsen-Modul eine Vorderachse oder eine Hinterachse eines Fahrzeugs bildet.

Sämtlichen Ausführungsvarianten des erfindungsgemäß vorgeschlagenen E-Achsen-Moduls ist gemeinsam, dass die integrierten, gekühlten Bremsen im E-Achsen-Modul gegen Umwelteinflüsse gekapselt in einem Gehäuse, sei es des Getriebes, sei es der E-Maschine, aufgenommen sind.

Das erfindungsgemäß vorgeschlagene E-Achsen-Modul wird, da nunmehr nicht durch Umgebungsluft kühlbar, durch eine Kühlfluidführung gekühlt, wobei die mindestens eine E-Maschine und/oder eine elektronische Steuereinheit gleichzeitig mitgekühlt werden. Die Kühlfluidführung verläuft durch ein Gehäuse, in welchem beispielsweise die integrierten, gekühlten Bremsen aufgenommen sind, wobei das Gehäusekühlfluid Kanäle aufweist, die die entstehende Wärme abführen.

Der erfindungsgemäß vorgeschlagenen Lösung weiter folgend, sind die E-Achsen-Module so beschaffen, dass die integrierten, gekühlten Bremsen durch einen Bremsaktuator betätigt sind, der eine Federanordnung aufweist oder mittels eines Tellerfedernpaketes - um ein Bespiel zu nennen - beaufschlagt ist.

Durch diese Ausführungsvariante kann beispielsweise erreicht werden, dass die im E-Achsen-Modul vorgesehenen integrierten, gekühlten Bremsen im stromlosen Zustand durch die Federvorspannung des Tellerfedernpaketes eine Parksperrenfunktion realisieren, sodass das Vorsehen einer gesonderten Feststellbremse nicht erforderlich ist.

Um eine Temperierung, insbesondere eine Kühlung des erfindungsgemäß vorgeschlagenen E-Achsen-Moduls zu verbessern, weist in dieses integrierte, gekühlte Bremse einen Rotor aus Keramik auf, der mit einem Stator und einer Druckplatte zusammenwirkt, die durch die Kühlfluidkühlung gekühlt sind, durch in unmittelbarer Umgebung verlaufende Kühlkanäle im Gehäuse der Bremse oder des Getriebes. Von der integrierten, gekühlten Bremse erzeugte Verlustwärme kann zur Temperierung einer Fahrzeugbatterie oder eines Innenraumes des Fahrzeugs benutzt werden.

Durch das E-Achsen-Modul, beispielsweise in der Ausführungsvariante mit einer E-Maschine als Einzelantrieb mit in das E-Achsen-Modul integrierten, gekühlten Bremsen, können schnelle fahrdynamische Radmomenteneingriffe, beispielsweise über die E-Maschine erfolgen, während die radindividuell durch die integrierten, gekühlten Bremsen unterstützt werden, die ausgangsseitig am Differential oder Torsendifferential angeordnet sind, die bei E-Achsen-Modulen mit einer E-Maschine als Einzelantrieb zum Einsatz kommen.

### Vorteile der Erfindung

Durch die erfindungsgemäß vorgeschlagene Lösung können die Kosten für die Entwicklung, Fertigung und Logistik getrennter System eingespart werden, da eine Integration derselben in einer Baueinheit, nämlich das erfindungsgemäß vorgeschlagene E-Achsen-Modul, erfolgt. In vorteilhafter Weise ist das erfindungsgemäß vorgeschlagene E-Achsen-Modul in das Thermomanagement bzw. in den Kühlkreislauf von E-Maschine, Getriebeanordnung und Gehäuse integriert. so, dass die fehlende Luftkühlung durch eine Fluidkühlung ersetzt werden kann. Es besteht die Möglichkeit, die integrierte, gekühlte Bremse gegen das Motormoment der E-Maschine anzusteuern, um Abwärme für die Klimatisierung des Innenraumes des Fahrzeugs zu erzeugen. In vorteilhafter Weise kann durch diese Maßnahme ein separates Heizelement eingespart werden. Die in das E-Achsen-Modul integrierte, gekühlte Bremse hat in vorteilhafter Weise kein eigenes Steuergerät, sondern wird von einem oder mehreren E-Achsen-Modulsteuergeräten angesteuert. Als weiterer Vorteil ist zu nennen, dass der die integrierte, gekühlte Bremse betätigende Bremsaktuator kostengünstig ausgelegt werden kann, weil das Bremsmoment der mindestens einen E-Maschine sofort verfügbar ist, wodurch die Anforderungen an die Reibbremse entschärft werden, da eine geringere Aktuierungsgeschwindigkeit notwendig ist, was sich günstig auf die Auslegung des Bremsaktuators auswirkt. Es können hochdynamische Radbremsmomente, zum Beispiel für ABS oder ESP-Regelungen von der mindestens einen E-Maschine gestellt werden, während die integrierten, gekühlten Bremsen lediglich niederdynamisch unterstützend wirken.

In der Ausführungsvariante, bei der in dem erfindungsgemäß vorgeschlagenen E-Achsen-Modul lediglich eine E-Maschine als Einzelantrieb vorhanden ist und ein Achsdifferential verbaut ist, werden die integrierten, gekühlten Bremsen an den beiden Ausgängen des Achsdifferentials montiert. Schnelle, fahrdynamische Radmomenteneingriffe werden sofort über die als Einzelantrieb wirkende E-Maschine gestellt, dann radindividuell durch die langsameren integrierten, gekühlten Bremsen, die sich an den Ausgängen des Differentials befinden, unterstützt. Zu diesem Zweck werden die mindestens eine E-Maschine und die integrierten, gekühlten Bremsen gleichzeitig abgestimmt aus einem Steuergerät des E-Achsen-Moduls angesteuert. In einer vorteilhaften Ausführungsvariante wird das E-Achsen-Modul mit integrierten, gekühlten Bremsen an einer Hinterachse eines Fahrzeugs eingesetzt. Die Vorderachse kann konventionell ausgebildet sein, ist aber nicht mechanisch mit der Hinterachse verbunden.

Die verschiedenen Ausprägungen des erfindungsgemäß vorgeschlagenen E-Achsen-Moduls erlauben dessen Einsatz, beispielsweise an einem Personenwagen mit einem E-Achsen-Modul als Hinterachse und einer klassischen Vorderachse, wobei Bremsen in die Räder integriert sind. In dieser Ausführungsvariante besteht keine mechanische Verbindung zwischen der konventionell ausgebildeten Vorderachse, insbesondere keine Bremsleitungen und zentrale Bremshydrauliken und dem als Hinterachse dienenden E-Achsen-Modul. Das E-Achsen-Modul kann in vorteilhafter Weise aber auch so beschaffen sein, dass sich beispielsweise bei dem E-Achsen-Modul zwei radindividuelle E-Maschinen befinden und die integrierten, gekühlten Bremsen zwischen den E-Maschinen und dem Getrieben angeordnet sind, so dass ein gesondertes Differential überflüssig ist. Bei langsam fahrenden Fahrzeugen wie beispielsweise urban automated taxis (Geschwindigkeitsbereich < 50 km/h) können E-Achsen-Module an Vorderachse und Hinterachse eingesetzt werden. Bei diesen Einsatzfällen kommen beispielsweise E-Achsen-Module zum Einsatz, die eine E-Maschine als Einzelantrieb aufweisen und beispielsweise ein als Torsendifferential ausgebildetes Differential aufweisen. Des Weiteren sind langsam fahrende SAEV's denkbar, die an allen vier Rädern unabhängig voneinander mittels " corner Modulen" angetrieben werden. Bei diesen Ausführungsvarianten sind die integrierten, gekühlten Bremsen zwischen die als Planetengetriebe ausgebildeten Getriebeanordnungen und die E-Maschinen integriert.

### Kurze Beschreibung der Zeichnungen

Anhand der Zeichnung wird die Erfindung nachstehend eingehender beschrieben.

Es zeigt:
- Figur 1: ein E-Achsen-Modul mit radindividuellen als individueller E-Maschine, Getriebe ohne Differential in symmetrischer Ausführung,
- Figur 2: einen Schnitt durch eine integrierte, gekühlte Bremse mit Federvorspannung durch mindestens eine Tellerfeder,
- Figur 3.1: ein E-Achsen-Modul mit einer E-Maschine als Einzelantrieb und Differential,
- Figur 3.2: ein E-Achsen-Modul mit einer E-Maschine als Einzelantrieb und einem Torsendifferential,
- Figur 4: eine Fahrzeugkonfiguration mit konventioneller Vorderachse mit einem E-Achsen-Modul als Hinterachse, in der Ausführungsvariante mit einer E-Maschine als Einzelantrieb und Differentialgetriebe,
- Figur 5: eine Fahrzeugkonfiguration ebenfalls mit einer konventionellen Vorderachse und einem E-Achsen-Modul als Hinterachse mit radindividuellen E-Maschinen und Getrieben,
- Figur 6: eine Fahrzeugkonfiguration mit E-Achsen-Modul an Vorderachse und Hinterachse,
- Figur 7: eine Fahrzeugkonfiguration mit vier radindividuellen E-Maschinen, Getrieben und in diese integrierte, gekühlte Bremsen,
- Figur 8: eine Ausführungsvariante eines E-Achsen-Moduls mit einer Bremse, die auf der der Getriebeseite abgewandten Seite der E-Maschine angeordnet ist und
- Figur 9: eine Ausführungsvariante eines E-Achsen-Moduls, bei dem einer Stirnradstufe nachgeschaltet, ein Differential angeordnet ist, auf dessen Abtriebswelle sich jeweils eine Bremse befindet.

### Ausführungsvarianten

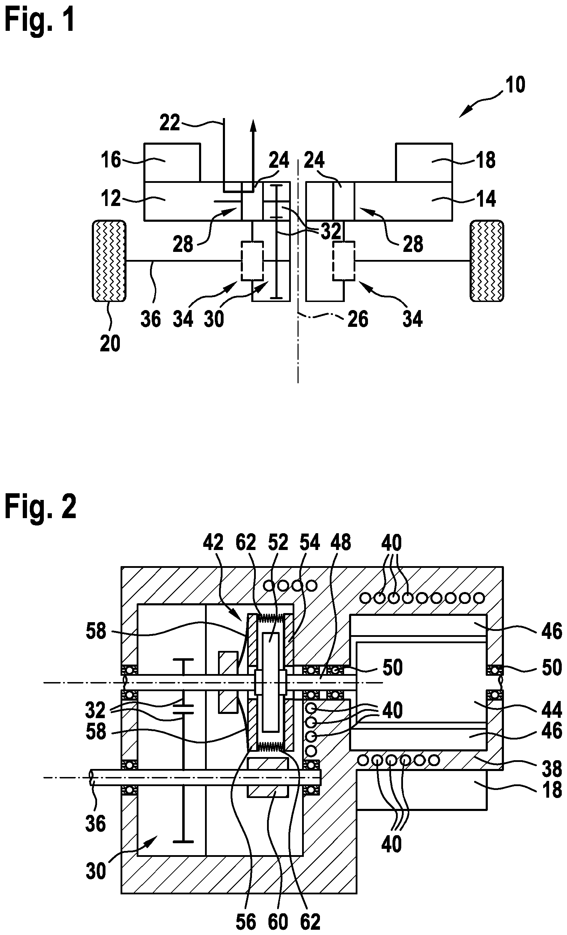

Der Darstellung gemäß Figur 1 ist ein E-Achsen-Modul 10 zu entnehmen, welches radindividuelle Antriebe 84 aufweist, symmetrisch ausgebildet ist und differentialgetriebefrei ausgeführt ist.

Aus Figur 1 geht hervor, dass das E-Achsen-Modul eine erste E-Maschine 12 sowie eine zweite E-Maschine 14 aufweist. Der ersten E-Maschine 12 ist eine erste Steuereinheit 16 zugeordnet, während der zweiten E-Maschine 14 eine zweite Steuereinheit 18 zugeordnet ist. Das E-Achsen-Modul 10 ist symmetrisch bezüglich seiner Symmetrieachse 26 ausgebildet. Über die beiden radindividuellen Antriebe 84, nämlich die erste E-Maschine 12 und zweite E-Maschine 14 werden Getriebe 30 angetrieben, die hier in schematischer Weise dargestellt, eine Stirnradstufe 32 umfassen. Bezugszeichen 22 beschreibt eine Kühlfluidführung, mit der sowohl die erste Steuereinheit 16, die erste E-Maschine 12 sowie eine integrierte, gekühlte Bremse 24 gekühlt werden können. Den radindividuellen Antrieben 84 jeweils zugeordneten integrierten, gekühlten Bremsen 24, sind gegen Umwelteinflüsse gekapselt in einer ersten Bremsenposition, beispielsweise zwischen den beiden E-Maschinen 12, 14 einerseits und dem Getriebe 30 andererseits aufgenommen. In einer zweiten Bremsenposition 34 können die beiden integrierten, gekühlten Bremsen auch betriebsseitig am Getriebeabtrieb der beiden Getriebe 30 angeordnet sein und auf Getriebeausgangswellen 36 einwirken, die angetriebenen Räder 20 antreiben, wie in Figur 1 schematisch angedeutet. Auch die integrierten, gekühlten Bremsen 24, die entweder zwischen der E-Maschinen 12, 14 einerseits und den Getrieben 30 andererseits oder am Getriebeabtrieb der Getriebe 30 angeordnet werden, sind ebenfalls Teil der Kühlfluidführung 22, mit der das E-Achsen-Modul 10 gekühlt wird. Durch die Kühlfluidführung 22, d.h. eine fehlende Umgebungsluftkühlung werden insbesondere Probleme wie Korrosion, Feinstaubemission, Zugängigkeit beim Service sowie die nachteiligen Folgen von sich auf Bremsscheiben anordnenden anlagernden Wasserfilmen unterbunden.

Figur 2 zeigt einen Schnitt durch einen Teil eines E-Achsen-Moduls mit elektrischer Maschine, Getriebe 30 und in ein Gehäuse integrierter gekühlter Bremse 24, 42.

Aus der Schnittdarstellung gemäß Figur 2 geht hervor, dass im Gehäuse 38 Kühlfluidkanäle 40 verlaufen. Diese verlaufen derart, dass diese sich im Bereich des Stators 46 erstrecken und dort entstehende Wärme abführen. Des Weiteren sind die Kühlfluidkanäle 40 so bemessen, dass diese auch im Bereich der integrierten, gekühlten Bremse 24 im Gehäuse 38 verlaufen und die integrierte, gekühlte Bremse kühlen. Der Kühlfluidstrom durch die Kühlfluidkanäle 40 verläuft entsprechend der abzuführenden Wärme aus den Komponenten des E-Achsen-Moduls. Diese können beispielsweise von dem Kühlfluid in seiner Kühlfluidführung 22, die die Kühlfluidkanäle 40 umfasst, derart durchströmt werden, dass das kalte Kühlfluid erst einen Inverter, dann die E-Maschine 12 bzw. 14 oder 96 und schließlich die integrierte gekühlte Bremse 24 kühlt.

Figur 2 zeigt, dass ein Rotor 44 eine Rotorwelle 48 umfasst und innerhalb eines Stators 46 einer E-Maschine rotiert. Die Rotorwelle 48 ist im Gehäuse 38 in Lagern 50 aufgenommen. Daneben befindet sich im Gehäuse die integrierte Bremse 24. Die integrierte, gekühlte Bremse 24 umfasst einen Rotor 52, beispielsweise aus Keramik ausgebildet. Ein Stator der integrierten, gekühlten Bremse 24 ist mit Bezugszeichen 54 bezeichnet und wird durch die in unmittelbarer Nähe verlaufenden Kühlfluidkanäle 40 gekühlt. Daneben umfasst die integrierte, gekühlte Bremse eine Druckplatte 56, die ihrerseits über ein Tellerfedernpaket 58 vorgespannt sein kann. Dieses wird über einen Bremsaktuator 60 betätigt. Mit Bezugszeichen 62 sind Rückstellfedern bezeichnet, die sich zwischen dem Stator 54 der integrierten, gekühlten Bremse 24 und der Druckplatte 56 der integrierten, gekühlten Bremse 24 befinden, die beispielsweise auch als Hochtemperaturbremse 42 ausgeführt sein kann.

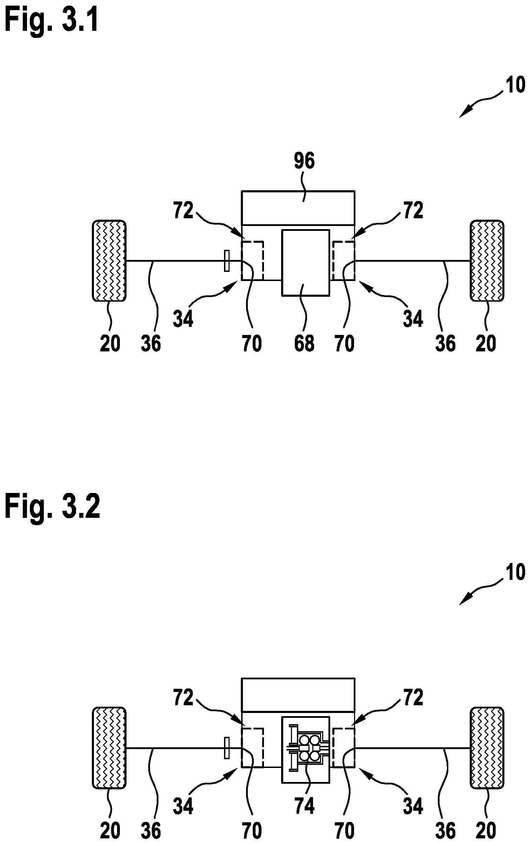

Der Darstellung gemäß Figur 3.1 ist eine Ausführungsvariante eines erfindungsgemäß vorgeschlagenen E-Achsen-Moduls 10 zu entnehmen mit einer E-Maschine als Einzelantrieb 96. In dieser Ausführungsvariante wirkt die E-Maschine als Einzelantrieb 96 auf ein Differential 68 ein. Im E-Achsen-Modul 10 befinden sich integrierte gekühlte Bremsen 24 in ihrer zweiten Bremsenposition 34 am Getriebeabtrieb, nämlich vor den Getriebeausgangswellen 36, die schließlich die Räder 20 antreiben. Bei der Bremsenposition 34 der integrierten, gekühlten Bremsen 24 stellt schließlich eine integrierte Bremsenanordnung 72 dar, bei der auch in der Ausführungsvariante gemäß Figur 3.1 bei einem E-Achsen-Modul 10 mit E-Maschine als Einzelantrieb 96 die integrierten, gekühlten Bremsen 24 gegen Umwelteinflüsse von außen gekapselt sind.

Figur 3.2 zeigt eine Abwandlung des E-Achsen-Moduls 10 gemäß der Darstellung in Figur 3.1.

In der Ausführungsvariante gemäß Figur 3.2 des erfindungsgemäß vorgeschlagenen E-Achsen-Moduls 10, findet anstelle eines konventionellen Differentials 68 mit mehreren miteinander kämmenden Kegelrädern ein Torsendifferential 74 Verwendung. Analog zur Ausführung des E-Achsen-Moduls 10 gemäß Figur 3.1 befinden sich die integrierten, gekühlten Bremsen 24 in ihrer zweiten Bremsenposition 34 ausgangsseitig des Torsendifferentials 74 und stellen die integrierte Bremsenanordnung 72 dar. Auch in dieser Ausführungsvariante befinden sich ausgangsseitig des Torsendifferentials 74 die Getriebeausgangswellen 36, die jeweils ein Rad 20 antreiben.

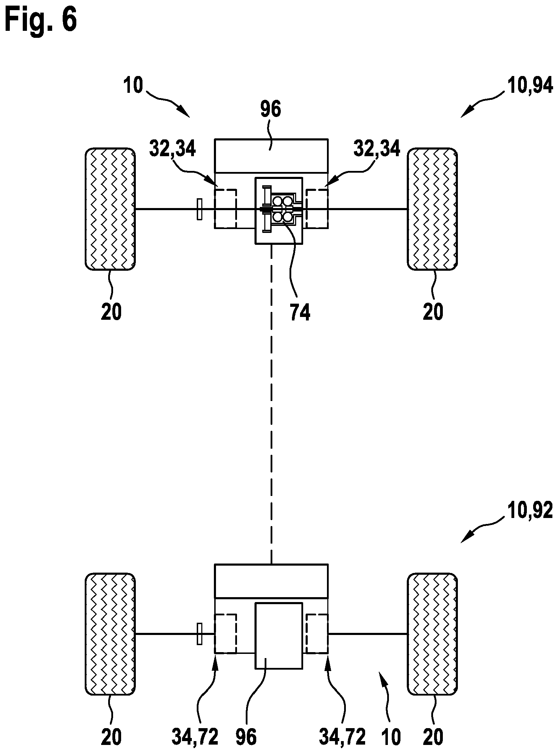

Die beiden in Figur 3.1 bzw. 3.2 dargestellten Ausführungsvarianten des E-Achsen-Moduls 10, können Einsatz finden in einem langsam fahrenden "beispielsweise urban automated taxi", vergleiche schematische Darstellung in Figur 6.

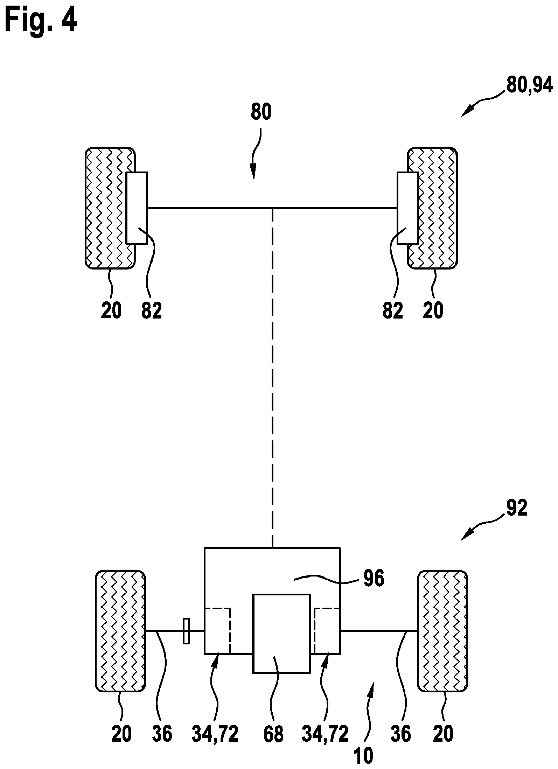

Der Darstellung gemäß Figur 4 ist eine Fahrzeugkonfiguration zu entnehmen, die als Hinterachse 92 ein erfindungsgemäßes E-Achsen-Modul 10 enthält.

Die in Figur 4 in schematischer Weise dargestellte Fahrzeugkonfiguration umfasst eine klassische konventionelle Achse 80, als Vorderachse 94. An den Rädern 20 der Vorderachse 94 gemäß der Darstellung in Figur 4 befinden sich Felgenbremsen 82. Als Hinterachse 92 dient ein E-Achsen-Modul 10, welches über Getriebeausgangswellen 36 die beiden Räder 20 antreibt. Im E-Achsen-Modul 10 gemäß der Darstellung in Figur 4 ist ein E-Antrieb als Einzelantrieb 96 aufgenommen. An dem E-Achsen-Modul 10 befinden sich die integrierten, gekühlten Bremsen 24 in der Bremsenposition 34 am Getriebeabtrieb des Differentials 68. Es besteht keine mechanische Verbindung zwischen der Hinterachse 92 und der Vorderachse 94, Es verlaufen keine Bremsleitungen zwischen den beiden genannten Achsen, ebenso wie auch ein zentraler Bremshydraulikblock fehlt. Auch in der Fahrzeugkonfiguration gemäß der Darstellung in Figur 4 befinden sich die integrierten, gekühlten Bremsen 24 in einer integrierten Bremsenanordnung 72, d.h. sind gegen Umwelteinflüsse gekapselt.

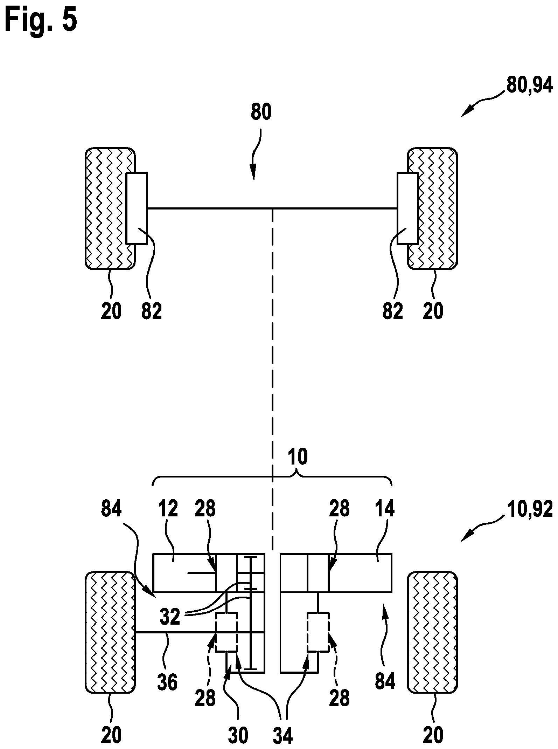

Aus der Darstellung gemäß Figur 5 geht eine weitere Fahrzeugkonfiguration hervor, bei der eine konventionelle klassische Achse 80 als Vorderachse 94 zum Einsatz kommt und die Hinterachse 92 als E-Achsen-Modul 10 beschaffen ist mit zwei radindividuellen E-Maschinen 12 und 14.

Figur 5 zeigt, dass die konventionelle Achse 80 zwei Räder 20 aufweist, die jeweils Felgenbremsen 82 umfassen. Im Gegensatz dazu wird die Hinterachse 92 durch eine Ausführungsvariante des erfindungsgemäß vorgeschlagenen E-Achsen-Moduls 10 gebildet. Gemäß der in Figur 5 dargestellten Lösung umfasst das E-Achsen-Modul 10 zwei radindividuelle E-Maschinen 12, 14, denen jeweils ein Getriebe 30 zugeordnet ist. Die integrierten, gekühlten Bremsen 24 befinden sich in einer ersten Bremsenposition 28, jeweils zwischen den E-Maschinen 12, 14 und den diesen zugeordneten Getrieben 30. Des Weiteren ist in gestrichelter Darstellung eine zweite Bremsenposition 34 angedeutet, wobei die integrierten, gekühlten Bremsen 24 am Getriebe 30, die eine Stirnradstufe 32 umfassen können, auf Getriebeausgangswellen 36 wirken, die wiederum die beiden Räder 20 des E-Achsen-Moduls 10 antreiben. Gemäß der Fahrzeugkonfiguration in Figur 5 ist kein Differential 68 erforderlich, jedoch werden zwei E-Maschinen 12, 14 und zwei Getriebe 30 eingesetzt.

Auch in der Fahrzeugkonfiguration wie sie in Figur 5 dargestellt ist, besteht keine mechanische Verbindung zwischen der Vorderachse 94 und der Hinterachse 92. Die radindividuellen Antriebe 84 sind am E-Achsen-Modul 10 symmetrisch zueinander angeordnet.

Figur 6 ist eine Fahrzeugkonfiguration zu entnehmen, welche beispielsweise für ein langsam fahrendes Fahrzeug 90 mit Geschwindigkeiten unterhalb von 50 km/h geeignet ist, auch bezeichnet als "urban automated taxi". Wie Figur 6 zu entnehmen ist, zeichnet sich diese Fahrzeugkonfiguration dadurch aus, dass sowohl an der Vorderachse 94 wie auch an der Hinterachse 92 jeweils ein E-Achsen-Modul 10 aufgenommen ist. Während an der Hinterachse 92 eine Ausführungsvariante des E-Achsen-Moduls 10 zum Einsatz kommt, die ein Differential 68 aufweist, über welches die Getriebeausgangswellen 36 und damit die Räder 20 angetrieben werden, umfasst das E-Achsen-Modul 10, welches die Vorderachse 94 darstellt, ein Torsendifferential 74. In der Fahrzeugkonfiguration gemäß Figur 6 befindet sich die integrierte, gekühlte Bremse 24 innerhalb des E-Antriebes als Einzelantrieb 96 getriebeausgangsseitig und in beiden Fällen, d.h. im E-Achsen-Modul 10 für die Vorderachse 94 und im E-Achsen-Modul 10 für die Hinterachse 92 gekapselt gegen Umwelteinflüsse. In beiden Fällen ergibt sich die integrierte Bremsenanordnung 72 der integrierten, gekühlten Bremsen 24 in der zweiten Bremsenposition 34 am Getriebeabtrieb, d.h. an den Getriebeausgangswellen 36.

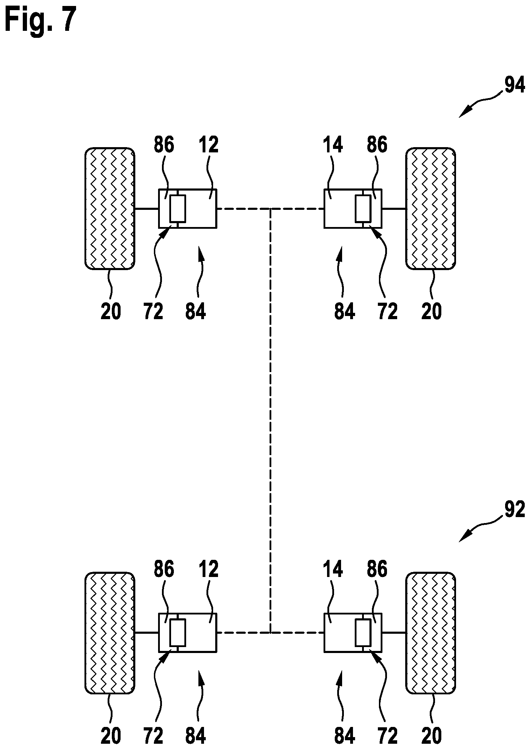

Der Darstellung gemäß Figur 7 ist eine weitere Fahrzeugkonfiguration zu entnehmen, welche beispielsweise für langsam fahrende SAEV's denkbar ist.

Wie der Konfiguration gemäß Figur 7 zu entnehmen ist, ist ein jedes der vier Räder 20 gemäß dieser Fahrzeugkonfiguration mit einem radindividuellen Antrieb 84 versehen, gebildet durch E-Maschinen 12, 14 sowie diesen zugeordneten Planetengetriebe 86. In einer jeder der vier radindividuell eingesetzten Module umfassend eine E-Maschine 12, 14 sowie ein Planetengetriebe 86, befinden sich die integrierten, gekühlten Bremsen 24 jeweils in einer integrierten Bremsenanordnung 72, d.h. jeweils zwischen E-Maschine 12, 14 und dem von dieser angetriebene Planetengetriebe 86. Auch in dieser Fahrzeugkonfiguration sind die integrierten, gekühlten Bremsen 24 gegen Umwelteinflüsse gekapselt.

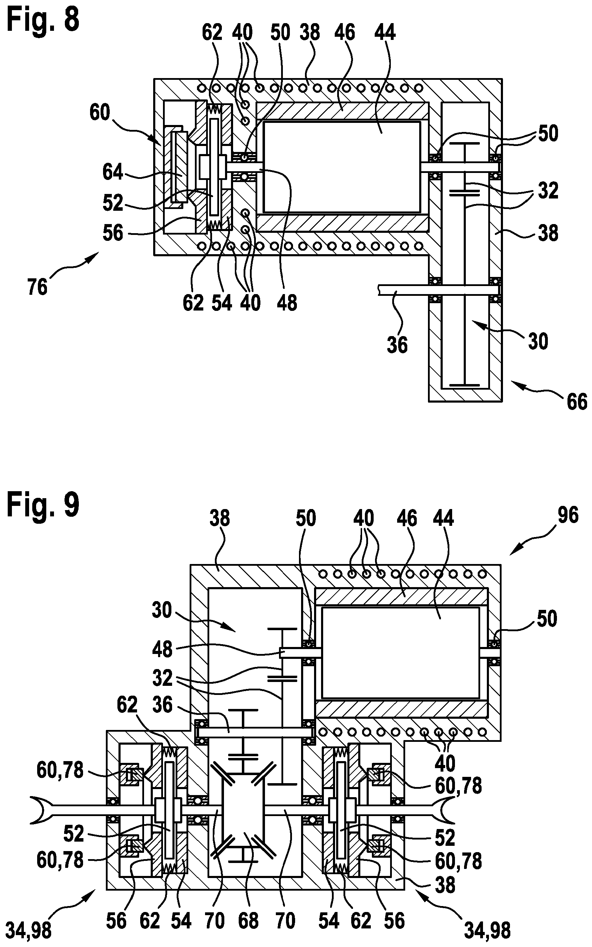

Gemäß der Darstellung in Figur 8 befindet sich eine in das Gehäuse 38 integrierte, gekühlte Bremse 24 auf einer der Getriebeseite 66 abgewandten Seite 76. Die hier dargestellte E-Maschine umfasst den Rotor 44 und den Stator 46, wobei der Rotor 52 auf der Rotorwelle 48 aufgenommen ist, die ihrerseits in Lagern 50 im Gehäuse 38 des E-Achsen-Moduls 10 gelagert ist. Der Rotor 44 treibt eine Stirnradstufe 32 an. Diese befindet sich ebenfalls innerhalb des Gehäuses 38. Auf der der Getriebeseite 66 abgewandten Seite 76 des Gehäuses 38, ist die integrierte, gekühlte Bremse 24 angeordnet, die einen gehäusefest montierten Stator 54 umfasst, den auf der Rotorwelle 48 aufgenommenen Rotor 52 sowie die mit dem Rotor 52 der Bremse zusammenwirkende Druckplatte 56. Der Bremsaktuator 60, der die Druckplatte 56 an den Rotor 52 der Bremse anstellt, ist in der Ausführungsvariante gemäß Figur 8 als Tellerkolben 64 ausgeführt. Mit Bezugszeichen 62 sind Rückstellfedern bezeichnet, welche die Druckplatte 56 nach Betätigung derselben durch den Bremsaktuator 60 wieder in ihre Ausgangslage, d.h. vom Rotor 52 der Bremse zurückstellen. Wie aus der Darstellung gemäß Figur 8 hervorgeht, ist das Gehäuse 38 von einer Vielzahl von Kühlfluidkanälen 40 durchzogen, die sich sowohl im Bereich der integrierten, gekühlten Bremse 24 befinden, als auch den Stator 54 der Bremse umschlingen. Mit Bezugszeichen 36 ist eine Getriebeausgangswelle des Getriebes 30, die Stirnradstufe 32 umfassend, bezeichnet.

Figur 9 zeigt einen E-Antrieb als Einzelantrieb 96. Aus der Darstellung gemäß Figur 9 geht hervor, dass innerhalb des Gehäuses 38 des E-Achsen-Moduls 10 der Stator 46 der E-Maschine angeordnet ist. Der Stator 46 umschließt den Rotor 44 der E-Maschine, der an einer Rotorwelle 48 aufgenommen ist, die in Lagern 50 drehbar im Gehäuse 38 aufgenommen ist. Der Stator 46 der E-Maschine seinerseits ist von einer Vielzahl von Kühlfluidkanälen 40 umschlungen. Der Rotor 44 der E-Maschine treibt über die Rotorwelle 48 das Getriebe 30, eine Stirnradstufe 32 umfassend, an. Die Getriebeausgangswelle 36 treibt ein Differential 68 an, an dessen Ausgängen 70 integrierte, gekühlte Bremsen 24 angeordnet sind, wobei jedem der Ausgänge 70 des Differentials 68 eine separate integrierte, gekühlte Bremse 24 zugeordnet ist. Im Unterschied zur Ausführungsvariante gemäß Figur 8 ist bei der in Figur 9 dargestellten Ausführungsvariante der Bremsaktuator 60 nicht als Tellerkolben 64, sondern als Ringkolben 78 ausgeführt. Der Ringkolben 78 beaufschlagt die Druckplatte 56, die ihrerseits jeweils an den Rotor 52 und der jeweiligen integrierten, gekühlten Bremse 24 anstellbar ist. Die integrierten, gekühlten Bremsen 24 sind im Gehäuse 38 aufgenommen, und umfassen des Weiteren den Stator 54, der drehfest im Gehäuse 38 untergebracht ist. Über die Rückstellfedern 62 erfolgt ein Zurückstellen des Stators 56 vom Rotor 52. Mit Bezugszeichen 98 ist eine Bremsposition am Differentialabtrieb bezeichnet, d.h. an den beiden Ausgängen 70 des Differentials 68.

## Patentansprüche

1. E-Achsen-Modul (10) mit mindestens einer in dieses integrierten E-Maschine (12, 14, 96), die eines oder beide am E-Achsen-Modul (10) aufgenommenen Räder (20) antreibt und mit einem Getriebe (30, 68, 74), wobei das E-Achsen-Modul (10) mindestens eine in dieses integrierte Bremse (24, 42) aufweist, die strukturell in die mindestens eine E-Maschine (12, 14, 96) oder das Getriebe (30, 68, 74) integriert ist,
wobei die integrierte Bremse (24, 42) mittels einer Kühlfluidkühlung temperiert wird,
**dadurch gekennzeichnet, dass**
die integrierte Bremse (24, 42) einen Rotor (52) aus Keramik, einen Stator (54) und eine Druckplatte (56) aufweist, wobei der Rotor (52) mit dem Stator (54) und der Druckplatte (56) zusammenwirkt, die durch die Kühlfluidkühlung gekühlt sind, wobei dies durch in unmittelbarer Umgebung verlaufender Kühlkanäle in einem Gehäuse der Bremse oder des Getriebes geschieht.

2. E-Achsen-Modul (10) gemäß Anspruch 1, **dadurch gekennzeichnet, dass** dieses eine E-Maschine (96) als Einzelantrieb aufweist, mit einem Differential (68) oder einem Torsendifferential (74), in welche ausgangsseitig Bremsen (24, 42) integriert sind.

3. E-Achsen-Modul (10) gemäß Anspruch 1, **dadurch gekennzeichnet, dass** dieses eine radindividuelle erste E-Maschine (12) und eine radindividuelle zweite E-Maschine (14) aufweist, die jeweils ein Getriebe (32) antreiben und das E-Achsen-Modul (10) den E-Maschinen (12, 14) jeweils zugeordnete, integrierte Bremsen (24, 42) aufweist.

4. E-Achsen-Modul (10) gemäß Anspruch 3, **dadurch gekennzeichnet, dass** die integrierten Bremsen (24, 42) in einer ersten Bremsposition (28) jeweils zwischen der ersten E-Maschine (12) und dem Getriebe (32) und zwischen der zweiten E-Maschine (14) und dem Getriebe (32) angeordnet sind.

5. E-Achsen-Modul (10) gemäß Anspruch 3, **dadurch gekennzeichnet, dass** die integrierten Bremsen (24, 42) in einer zweiten Bremsenposition (34) am Getriebeabtrieb der durch die erste und die zweite E-Maschine (12, 14) über das angetriebene Getriebe (32) angeordnet sind.

6. E-Achsen-Modul (10) gemäß der Ansprüche 2 oder 3, **dadurch gekennzeichnet, dass** das E-Achsen-Modul (10) eine Hinterachse (92) eines Fahrzeugs (90) bildet.

7. E-Achsen-Modul (10) gemäß Anspruch 2, **dadurch gekennzeichnet, dass** die E-Achsen-Module (10) eine Vorderachse (94) oder eine Hinterachse (92) eines Fahrzeugs (90) bilden.

8. E-Achsen-Modul (10) gemäß Anspruch 1, **dadurch gekennzeichnet, dass** die integrierte Bremse (24, 42) im E-Achsen-Modul (10) gegen Umwelteinflüsse gekapselt in ein Gehäuse (38) des Getriebes (30, 68, 74) aufgenommen ist.

9. E-Achsen-Modul (10) gemäß Anspruch 1, **dadurch gekennzeichnet, dass** die mindestens eine E-Maschine (12, 14, 96) und/oder eine elektronische Steuereinheit (16, 18) mittels der Kühlfluidführung (22) temperiert sind.

10. E-Achsen-Modul (10) gemäß Anspruch 9, **dadurch gekennzeichnet, dass** die Kühlfluidführung (22) durch ein Gehäuse (38) verläuft, in dem Kühlfluidkanäle (40) ausgeführt sind.

11. E-Achsen-Modul (10) gemäß Anspruch 1, **dadurch gekennzeichnet, dass** die integrierte Bremse (24, 42) durch einen Bremsaktuator (60) betätigt ist, der eine Federanordnung oder ein Tellerfedernpaket (58) beaufschlagt.

12. E-Achsen-Modul (10) gemäß Anspruch 11, **dadurch gekennzeichnet, dass** die integrierte Bremse (24, 42) im stromlosen Zustand durch eine Federvorspannung des Tellerfedernpaketes (58) eine Parksperrenfunktion realisiert.

13. E-Achsen-Modul (10) gemäß Anspruch 1, **dadurch gekennzeichnet, dass** die von der integrierten Bremse (24, 42) erzeugte Verlustleistung zur Temperierung einer Fahrzeugbatterie oder eines Innenraums des Fahrzeugs (90) benutzt wird.

14. E-Achsen-Modul (10) gemäß Anspruch 2, **dadurch gekennzeichnet, dass** bei einer E-Maschine (96) als Einzelantrieb schnelle fahrdynamische Drehmomenteneingriffe über die E-Maschine (96) als Einzelantrieb erfolgen, die radindividuell durch die integrierten Bremsen (24, 42) unterstützt werden, die ausgangsseitig am Differential (68) oder Torsendifferential (74) angeordnet sind.

15. E-Achsen-Modul (10) gemäß Anspruch 2, **dadurch gekennzeichnet, dass** Steuereinheiten (16, 18) die integrierten Bremsen (24, 42) dazu ausgelegt sind, ein Differenzmoment zwischen rechtem und linkem Rad (20) deutlich zu erhöhen, verglichen mit dem maximalen Drehmoment lediglich einer Bremse (24, 42).

## Claims

1. Electric axle module (10) comprising at least one electrical machine (12, 14, 96), which is integrated in said electric axle module and drives one or both of the wheels (20) held on the electric axle module (10), and comprising a gear mechanism (30, 68, 74), wherein the electric axle module (10) has at least one brake (24, 42), which is integrated in said electric axle module and is structurally integrated into the at least one electrical machine (12, 14, 96) or the gear mechanism (30, 68, 74),
wherein the temperature of the integrated brake (24, 42) is controlled by means of a cooling fluid cooling arrangement,
**characterized in that**
the integrated brake (24, 42) has a rotor (52) composed of ceramic, a stator (54) and a pressure plate (56), wherein the rotor (52) interacts with the stator (54) and the pressure plate (56), which are cooled by the cooling fluid cooling arrangement, wherein this is done by way of cooling ducts running in the immediate surrounding area in a housing of the brake or the gear mechanism.

2. Electric axle module (10) according to Claim 1, **characterized in that** it has an electrical machine (96) as the single drive, comprising a differential (68) or a Torsen differential (74) in which brakes (24, 42) are integrated at the output.

3. Electric axle module (10) according to Claim 1, **characterized in that** it has a wheel-specific first electrical machine (12) and a wheel-specific second electrical machine (14) which each drive a gear mechanism (32), and the electric axle module (10) has integrated brakes (24, 42) respectively associated with the electrical machines (12, 14).

4. Electric axle module (10) according to Claim 3, **characterized in that** the integrated brakes (24, 42) are respectively arranged between the first electrical machine (12) and the gear mechanism (32) and between the second electrical machine (14) and the gear mechanism (32) in a first braking position (28).

5. Electric axle module (10) according to Claim 3, **characterized in that** the integrated brakes (24, 42) are arranged at the gear mechanism output of the gear mechanism (32) via the driven by the first and the second electrical machine (12, 14) in a second brake position (34) .

6. Electric axle module (10) according to either of Claims 2 and 3, **characterized in that** the electric axle module (10) forms a rear axle (92) of a vehicle (90).

7. Electric axle module (10) according to Claim 2, **characterized in that** the electric axle modules (10) form a front axle (24) or a rear axle (92) of a vehicle (90).

8. Electric axle module (10) according to Claim 1, **characterized in that** the integrated brake (24, 42) in the electric axle module (10) is held in a housing (38) of the gear mechanism (30, 68, 74) such that it is encapsulated against environmental influences.

9. Electric axle module (10) according to Claim 1, **characterized in that** the temperature of the at least one electrical machine (12, 14, 96) and/or an electronic control unit (16, 18) is controlled by means of the cooling fluid guide (22).

10. Electric axle module (10) according to Claim 9, **characterized in that** the cooling fluid guide (22) runs through a housing (38) in which cooling fluid ducts (40) are realized.

11. Electric axle module (10) according to Claim 1, **characterized in that** the integrated brake (24, 42) is operated by a braking actuator (60) which acts on a spring arrangement or a plate spring assembly (58).

12. Electric axle module (10) according to Claim 11, **characterized in that** the integrated brake (24, 42) implements a parking brake function owing to a spring pretension of the plate spring assembly (58) in the deenergized state.

13. Electric axle module (10) according to Claim 1, **characterized in that** the power loss generated by the integrated brake (24, 42) is used for controlling the temperature of a vehicle battery or an interior of the vehicle (90).

14. Electric axle module (10) according to Claim 2, **characterized in that**, with an electrical machine (96) as the single drive, rapid driving-dynamics torque interventions are made by means of the electrical machine (96) as the single drive, these torque interventions being assisted in a wheel-specific manner by the integrated brakes (24, 42) which are arranged at the output of the differential (68) or Torsen differential (74) .

15. Electric axle module (10) according to Claim 2, **characterized in that** control units (16, 18) the integrated brakes (24, 42) are designed to considerably increase a differential torque between the right-hand-side and left-hand-side wheel (20) compared to the maximum torque of just one brake (24, 42).

## Revendications

1. Module d'essieu électrique (10), comprenant au moins une machine électrique (12, 14, 96) intégrée dans celui-ci et qui entraîne une ou deux roues (20) reçues au niveau du module d'essieu électrique (10), et une boîte de vitesses (30, 68, 74), le module d'essieu électrique (10) présentant au moins un frein (24, 42) intégré dans celui-ci et qui est intégré structurellement dans ladite au moins une machine électrique (12, 14, 96) ou la boîte de vitesses (30, 68, 74),
le frein intégré (24, 42) étant tempéré au moyen d'un refroidissement par fluide réfrigérant,
**caractérisé en ce que** le frein intégré (24, 42) présente un rotor (52) en céramique, un stator (54) et une plaque de pression (56), le rotor (52) coopérant avec le stator (54) et la plaque de pression (56) qui sont refroidis par le refroidissement par fluide réfrigérant, ce qui est effectué à travers des canaux de refroidissement s'étendant à proximité immédiate dans un carter du frein ou de la boîte de vitesses.

2. Module d'essieu électrique (10) selon la revendication 1, **caractérisé en ce qu'**il présente une machine électrique (96) comme entraînement unique, comprenant un différentiel (68) ou un différentiel Torsen (74) dans lesquels des freins (24, 42) sont intégrés côté sortie.

3. Module d'essieu électrique (10) selon la revendication 1, **caractérisé en ce qu'**il présente une première machine électrique (12) individuelle par roue et une deuxième machine électrique (14) individuelle par roue qui entraînent respectivement une boîte de vitesses (32), et le module d'essieu électrique (10) présente des freins intégrés (24, 42) associés aux machines électriques (12, 14) respectivement.

4. Module d'essieu électrique (10) selon la revendication 3, **caractérisé en ce que** dans une première position de freinage (28), les freins intégrés (24, 42) sont disposés respectivement entre la première machine électrique (12) et la boîte de vitesses (32) et entre la deuxième machine électrique (14) et la boîte de vitesses (32) .

5. Module d'essieu électrique (10) selon la revendication 3, **caractérisé en ce que** dans une deuxième position de frein (34), les freins intégrés (24, 42) sont disposés à la sortie de boîte de vitesses de la boîte de vitesses (32) par le biais de la entraînée par la première et la deuxième machine électrique (12, 14).

6. Module d'essieu électrique (10) selon la revendication 2 ou 3, **caractérisé en ce que** le module d'essieu électrique (10) constitue un essieu arrière (92) d'un véhicule (90).

7. Module d'essieu électrique (10) selon la revendication 2, **caractérisé en ce que** les modules d'essieu électriques (10) constituent un essieu avant (94) ou un essieu arrière (92) d'un véhicule (90).

8. Module d'essieu électrique (10) selon la revendication 1, **caractérisé en ce que** le frein intégré (24, 42) est reçu dans le module d'essieu électrique (10) en étant blindé contre les facteurs environnementaux dans un carter (38) de la boîte de vitesses (30, 68, 74).

9. Module d'essieu électrique (10) selon la revendication 1, **caractérisé en ce que** ladite au moins une machine électrique (12, 14, 96) et/ou une unité de commande électronique (16, 18) est/sont tempérée(s) au moyen du guidage de fluide réfrigérant (22).

10. Module d'essieu électrique (10) selon la revendication 9, **caractérisé en ce que** le guidage de fluide réfrigérant (22) s'étend à travers un carter (38) dans lequel des canaux de fluide réfrigérant (40) sont réalisés.

11. Module d'essieu électrique (10) selon la revendication 1, **caractérisé en ce que** le frein intégré (24, 42) est actionné par un actionneur de frein (60) qui sollicite un agencement de ressorts ou un bloc de ressorts à disques (58).

12. Module d'essieu électrique (10) selon la revendication 11, **caractérisé en ce qu'**à l'état sans courant, le frein intégré (24, 42) réalise une fonction de frein de stationnement par une précontrainte de ressort du bloc de ressorts à disques (58).

13. Module d'essieu électrique (10) selon la revendication 1, **caractérisé en ce que** la puissance dissipée générée par le frein intégré (24, 42) est utilisée pour tempérer une batterie de véhicule ou un habitacle du véhicule (90).

14. Module d'essieu électrique (10) selon la revendication 2, **caractérisé en ce que** pour une machine électrique (96) comme entraînement unique, des interventions de couple dynamiques rapides sont effectuées par l'intermédiaire de la machine électrique (96) comme entraînement unique qui sont assistées individuellement par roue par les freins intégrés (24, 42) qui sont disposés côté sortie au niveau du différentiel (68) ou du différentiel Torsen (74).

15. Module d'essieu électrique (10) selon la revendication 2, **caractérisé en ce que** des unités de commande (16, 18) les freins intégrés (24, 42) sont conçus pour augmenter nettement un moment différentiel entre la roue droite et la roue gauche (20) en comparaison avec le couple maximal d'un seul frein (24, 42).
